# NEW EUROPEAN PATENT SPECIFICATION

(11) **EP 2 102 614 B2**
(45) Date of publication and mention of the opposition decision: **14.06.2017**
(45) Mention of the grant of the patent: 08.05.2013
(21) Application number: 07857996.8
(22) Date of filing: 20.12.2007
(51) Int. Cl.: G01J 5/02, G01J 5/00

(54) **DEVICE AND METHOD FOR MEASURING THE TEMPERATURE OF THE LIQUID METAL IN AN ELECTRIC FURNACE**
EINRICHTUNG UND VERFAHREN ZUR MESSUNG DER TEMPERATUR DES FLÜSSIGEN METALLS IN EINEM ELEKTRISCHEN OFEN
DISPOSITIF ET PROCÉDÉ POUR MESURER LA TEMPÉRATURE DU MÉTAL LIQUIDE DANS UN FOUR ÉLECTRIQUE

(30) Priority: 27.12.2006 IT UD20060277
(43) Date of publication of application: 23.09.2009
(73) Proprietor: Danieli & C. Officine Meccaniche SpA, 33042 Buttrio (UD) (IT)
(72) Inventor: POLONI, Alfredo, 34070 Fogliano Redipuglia (IT); GUASTINI, Fabio, 34070 Dolegna Del Collio (IT); VECCHIET, Fabio, 33052 Cervignano Del Friuli (IT); ANSOLDI, Marco, 33100 Udine (IT)
(74) Representative: Petraz, Gilberto Luigi
(86) International application number: PCT/EP2007/064377
(87) International publication number: WO 2008/077900

(56) References cited:
- EP-A1- 0 866 139
- WO-A1-97/22859
- WO-A1-03/044475
- DE-A1- 1 812 368
- DE-A1- 10 352 628
- DE-T2-602004 012 636
- US-A- 4 965 813
- US-A- 5 951 164
- US-A1- 2004 240 518
- US-A1- 2005 145 071
- US-B1- 6 172 367

## Description

### FIELD OF THE INVENTION

The present invention concerns a device, and the relative method, for measuring the temperature of the liquid metal, for example steel or suchlike, in an electric arc furnace or other similar melting container analogous or comparable to a furnace.

In particular, the invention concerns a measuring device and method which do not require contact of the measuring instrument with the bath of liquid metal whose temperature it is desired to know.

### BACKGROUND OF THE INVENTION

It is known that, during the melting process in an electric arc furnace, it is very important to know precisely the temperature of the liquid bath and to obtain the largest possible number of values of said temperature in the course of the process.

Measuring can be done continuously or with measurements of the discreet type, introducing at pre-determined moments suitable measuring instruments into contact or close proximity with the liquid metal whose temperature is to be measured. Such measurements are disclosed in US 6 172 367, US 2004/0240518 and US 5951164.

The solutions that provide to immerse the measuring instrument into, or in any case to bring it into contact even for a short duration with, the liquid metal are not very reliable inasmuch as they require intense cooling systems that can alter the result of the measurement, and are subject to premature wear and need costly and frequent maintenance.

For example, the solution described in JP 6129912 A provides to use a thermocouple, protected by a consumable cartridge and so single-use, which is immersed manually or by means of automated mechanical systems, into the liquid bath. With every single measurement, the cartridge has to be changed, and generally not more than one measurement is made for each melting cycle in order to limit the cost of spare parts. This solution, furthermore, does not allow to perform continuous measuring.

Solutions are also known, for example from JP 62 293128 A and from JP 62 226025 A, which provide to use a temperature measurement device comprising a measuring instrument mounted directly on a lance through which oxygen is blown at high pressure, so as to free a surface of the metal from slag and expose it for detection by the measuring instrument.

These solutions, however, are not very reliable either, inasmuch as the oxygen injected into the bath increases the temperature thereof, falsifying the measurement and thus making it not very reliable.

These solutions are also easily subject to wear, in particular to overheating and impacts against the scrap.

Moreover, these solutions are problematical because the measuring device is hit by the jet of gas or air at very high speed, which creates on the one hand losses of load in the flow, and hence less force of impact of the jet of gas/air against the layer of slag, and on the other hand possible damage and wear to the measuring instrument and, possibly, a consequent lower sensitivity and accuracy in measuring.

Another disadvantage of known solutions is that it is difficult to guarantee the maintenance of a constant distance, or at least a known distance, between the measuring device and the meniscus of liquid metal, in particular due to the reduction in the thickness of the refractory material as the melting cycle proceeds, or due to fluctuations in the level of the liquid metal due to other causes. This variation in the distance between the measuring device and the meniscus of the liquid metal causes losses of accuracy in the measurement.

A first purpose of the present invention is to obtain a device, and the relative method, for measuring the temperature of the liquid metal in a melting furnace which are simple and economical and which reduce to a minimum the need for maintenance and replacement of parts.

Another purpose is to achieve a device that is minimally subject to risks of damage and wear, and which guarantees in any case accurate, reliable and constant measurements substantially irrespective of the variations in the level of the meniscus of liquid metal whose temperature it is desired to know.

The Applicant has devised, tested and embodied the present invention to obtain these purposes, and other advantages as will be shown hereafter.

### SUMMARY OF THE INVENTION

The present invention is set forth and characterized in the respective independent claims, while the dependent claims describe other characteristics of the main inventive idea.

The device for measuring temperature according to the present invention is applied preferentially, but not necessarily, to an electric arc furnace (E.A.F.) of the type with a hole to discharge the liquid steel located on the bottom of the hearth in an eccentric position ("Eccentric Bottom Tapping" (EBT)), to prevent the foamy slag from accompanying the liquid steel during tapping.

This type of furnace also provides the possibility of tilting around an axis, by means of suitable drive systems, in order to effect for example the operations to discharge the slag, on one side, and to tap the liquid steel from the EBT, on the other side.

During use, advantageously, the measuring device according to the invention is mounted in a somewhat high position with respect to the meniscus of the liquid steel, preferably equal to or more than 1 meter. In this position the lower end of the device, inserted inside the furnace, is advantageously sheltered from possible impacts with the scrap during the loading step, and also from possible sprays of steel and slag, and also from risks of overheating; moreover, this high position ensures that the device is never reached by the level of the slag.

The device according to the invention essentially consists of a tubular pipe cooled, for example by the circulation of water in an external jacket, which extends advantageously for a considerable part of the overall length of the device; the inlet and outlet of water in said jacket are achieved by means of two suitable tubes.

In a preferential embodiment, the device is contained in a box or container, removable and/or opening, which also has the task of protecting it from damage and facilitating the removal thereof for operations of maintenance or repair.

On the axial extension of the pipe, outside and above it, an optical detection instrument is disposed, able to measure without contact the temperature of the liquid steel.

The functioning principle of the device according to the invention is based on opening a passageway in the layer of slag by means of a jet of gassy fluid, for example inert gas or air, emitted at high speed, advantageously with a flow pulse, through said tubular pipe, and on effecting the reading of the temperature indirectly, without contact, through said optical instrument.

According to one characteristic of the device according to the invention, the optical detection instrument is located in a position upstream of the inlet of the jet of inert gas or air into said tubular pipe.

Thanks to this positioning of the detection instrument, the jet of inert gas/air is not disturbed by any disturbing element in its travel inside the tubular pipe from inlet to outlet of the device. In this way, there are no losses of load and hence no reduction in the force of impact of the jet, which can thus be directed against the slag with the maximum possible force.

Moreover, the flow maintains, also at outlet from the tubular pipe, a substantially constant section until the point of impact with the slag, and a coherent length proportional with the flow values and the feed pressure, which entails a greater efficiency in opening the passageway in the slag by means of the jet.

In a preferential embodiment of the invention, upstream of the inlet and outlet tubes of the cooling water, there is a connection tube, through which the tubular pipe interfaces, by means of a two-way electro valve (of the on-off type, that is, with rapid opening and closing and linear development) with a tank or accumulator that contains a gassy fluid, for example inert gas (nitrogen or argon) or air, at high pressure, comprised between 8 bar and 16 bar, preferably equal to 12 bar.

Instead of the tank it is possible to connect the tubular pipe to a distribution line of inert gas or air, at high pressure, which is equivalent to having a tank with a substantially infinite capacity.

The valve is opened for a short interval of time, for example from 1 to 5 seconds, to allow the inert gas or air come out from the tank under pressure through the pipe; at the instant when the jet opens the passageway in the slag, the optical instrument "sees" the liquid steel contained in the melting furnace and can effect one or more measurements of the temperature.

In the invention, in the terminal part the pipe has an internal section shaped like a "De Laval" nozzle; in this way, in correspondence with the outlet section of the pipe, a coherent jet is obtained at supersonic speed which is able to penetrate the layer of slag and at least a segment of the metal bath (for example 300-400 mm).

According to a first variant, the electro valve is opened and then closed rapidly (after about 1 second) for the emission of a flow pulse.

According to a second variant, the on/off valve is kept open for a longer time (from 2 to 5 seconds) after the emission of a flow pulse, in order to gradually extinguish the flow of gas and then to slowly close the passageway in the slag created previously, thus contrasting the phenomenon of splashing of the slag which occurs when the pulsing jet is suddenly interrupted. In this way we avoid more effectively the risk of occlusion of the emission hole of the delivery pipe.

The gradual reduction in flow after the pulsing delivery step evolves according to the free emptying of the tank, which occurs in about 5 seconds; subsequently, the valve is closed and the tank is reloaded for a new delivery step.

In the event that instead of the tank, feed is made through a distribution line, the descent ramp of the flow is advantageously managed using a valve of the proportional type to regulate the flow instead of the on/off valve.

Upstream of the position where the gassy fluid is introduced inside the delivery pipe, there is a pipe to introduce pressurized air in order to effect a continuous "washing" of the pipe in order to prevent blockages thereof, for example in the steps of loading scrap, slagging or tapping.

According to an embodiment of the invention, around the pipe which delivers the jet of gas, one or more conduits are provided through which a mixture of a gaseous fuel, for example methane, and oxygen is delivered in order to obtain at the exit of the pipe an annular flame. The annular flame is provided in order both to protect the coherent jet of gas during the delivery towards the layer of slag, and to avoid crusting and plugging of the optical detector due to the particles of slag hitten by the jet of gas. Moreover, the annular flame allows to maintain clean the space of the furnace through which the optical detector performs its detection, avoiding that formations of slag and other products may obstruct both the delivery of the gaseous jet and the optical measurement.

In another embodiment, one or more burners are provided near and/or around the delivery pipe in order to maintain clean the space of the furnace through which the optical detector performs its detection, avoiding that formations of slag and other products may obstruct both the delivery of the gaseous jet and the optical measurement. Advantageously, at least two burners that deliver oriented flames around the jet of gas are provided and are arranged in a parallel orientation with respect to the delivery pipe, so as to form together a protecting annular flame around the jet of gas at the exit of the delivery pipe.

According to one characteristic of the measuring method according to the present invention, in order to guarantee penetration of the jet into the slag, and hence to perform the measurement of the temperature with accuracy, the device is made to approach the surface of the liquid bath, making the furnace tilt to the side of the eccentric tapping hole (E.B.T.).

In this way, the device can be kept at a safety distance, as said before, equal to or more than 1 meter, during the steps when the temperature is not being measured, to preserve it from knocks, contacts, blockages and overheating.

When the measurement is to be made, the furnace is tilted, for example by some degrees, using the normal devices, for example hydraulic jacks already present, to the side of the tapping hole, making the measuring device lower on that side and hence bringing it closer to the level of the liquid metal.

For example, if with the furnace in a horizontal position the outlet section of the injector is at 1,100 mm from the surface of the bath, then, in order to make the reading, the furnace is tilted by about 4° so as to reduce said distance to about 700 mm.

In this way, the efficiency of the jet of gas to open the slag is guaranteed, and the efficacy of the measurement with the device in a condition of safety.

Moreover, this characteristic can be exploited to compensate for possible variations in the level of the meniscus of the liquid metal.

For example, after a certain number of melting cycles the refractory that is on the bottom of the hearth is used up, so that the level of the molten bath can be lowered by up to 150-200 mm with respect to the nominal level; to recoup this gap, during the reading step the furnace is advantageously tilted by a greater degree which is commensurate with the gap to be compensated.

Therefore, in every working condition, it is possible to guarantee a constant (pre-defined) distance of the device from the surface of the bath; this distance is that which allows the penetration of the slag by the coherent jet, and hence the precise reading of the temperature.

According to a preferential embodiment of the invention, the optical instrument is preferably of the bi-chromatic type, that is, it is able to read two frequency bands and is therefore less sensitive to disturbances, and can read the temperature every 10-15 milliseconds.

According to another variant, the device is installed on a wall of the melting furnace with the tubular pipe advantageously inserted on a cooled copper element, or cooling block.

### BRIEF DESCRIPTION OF THE DRAWINGS

These and other characteristics of the present invention will become apparent from the following description of a preferential form of embodiment, given as a non-restrictive example with reference to the attached drawings wherein:

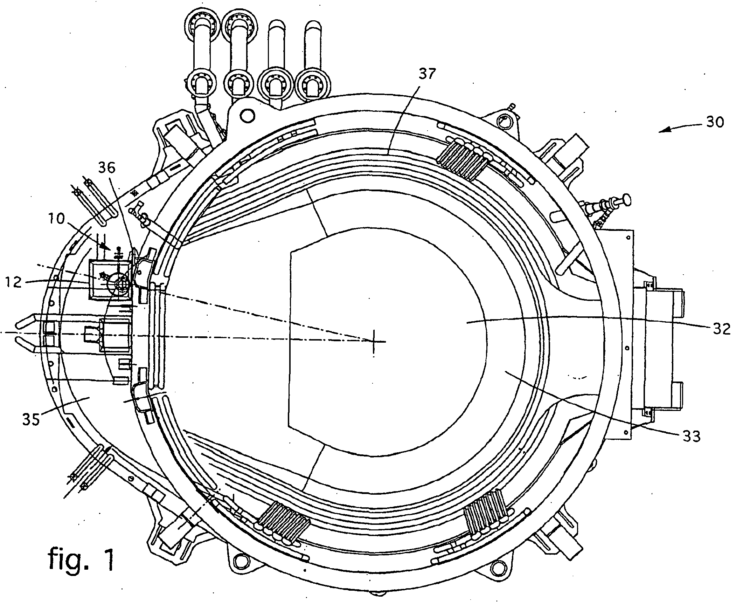

- fig. 1 is a plane view of an electric arc furnace in which the device to measure the temperature of the liquid steel according to the invention is able to be used;
- fig. 2 shows a longitudinal section of the electric furnace in fig. 1;
- fig. 3 shows an enlargement of part of fig. 2 on which a measuring device according to the invention is installed;
- fig. 4 shows a temperature measuring device according to the invention;
- fig. 5 is a plane view of the installation of a measuring device according to the invention.

### DETAILED DESCRIPTION OF A PREFERENTIAL FORM OF EMBODIMENT

With reference to the attached drawings, a device for measuring the temperature of liquid metal is indicated in its entirety by the reference number 10, and can be used in an electric arc furnace 30 to measure, without contact, the temperature of the liquid metal 40 contained inside it.

The electric arc furnace 30 is of a known type, and only the parts necessary for a correct understanding of the invention will be described, since its general structure is well known to persons of skill in the art.

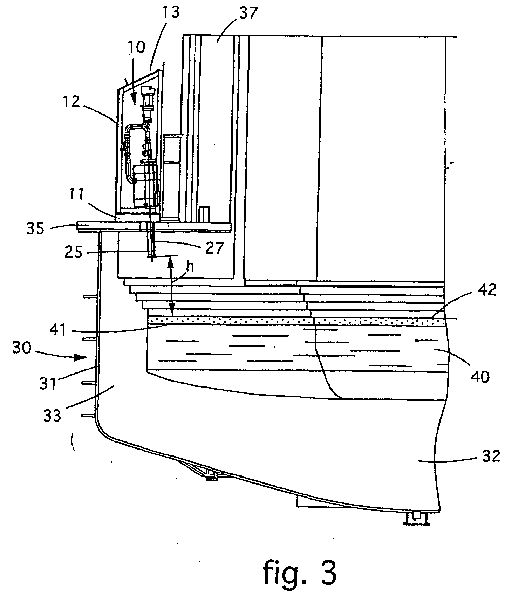

In particular (fig. 3), the furnace 30 has a hearth 31, comprising a bottom 32 and lateral walls 33 lined with refractory material.

The height of the hearth 31 substantially defines the level of the meniscus 41 of the liquid metal 40, above which there is a layer of foamy slag 42. Above the hearth 31 the furnace 30 has a cooled annular covering 37 consisting of panels in which cooling water circulates.

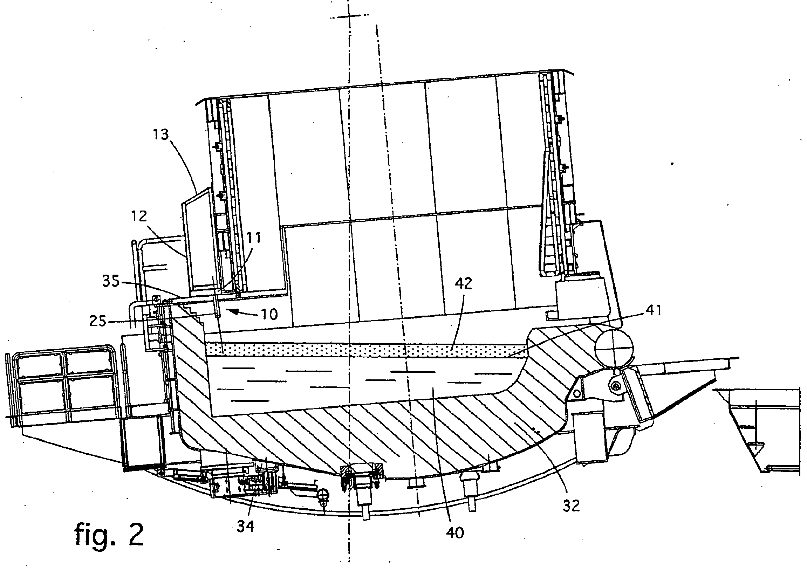

The electric arc furnace 30 shown in the drawings, in particular in fig. 2, provides a tapping hole (E.B.T.) 34 for the liquid metal 40 on the bottom 32 of the hearth 31 located in an eccentric position. The furnace 30 is also associated with drive systems, of a known type and not shown in detail in the drawings, to effect for example the operations to discharge the slag, on one side, and to tap the liquid steel on the opposite side.

The device for measuring the temperature 10 according to the invention is mounted on an external plane 35 of the hearth 31 of the furnace 30 on the side of the tapping hole 34. Its assembly position (fig. 3) is such that, in normal conditions, that is, with the furnace not tilted, the distance "h" between its terminal end and the upper level of the slag 42 is at least equal to, advantageously more than, 1 meter. Thanks to this great distance, the device 10 is protected, in particular when not in use, from overheating and from risks of contact with slag and scrap, for example during the loading of the furnace 30.

The device 10 is disposed inside a box-like structure 12, to contain and protect it, substantially closed and accessible to the operator in the case shown here by means of a door 13. The protective structure 12 is installed on a base 11 which is in turn mounted on said plane 35.

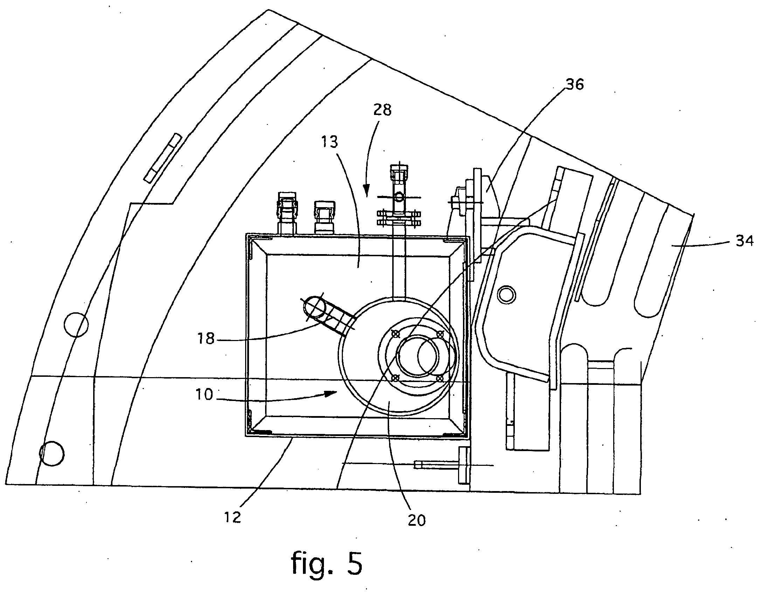

The box-like structure 12 is also anchored on the external wall of the furnace 30 by wedge means 36 (fig. 5), which allows it to be removed easily and quickly, for example in the maintenance steps and change of hearth, or when maintenance or repair works have to be carried out on the device 10.

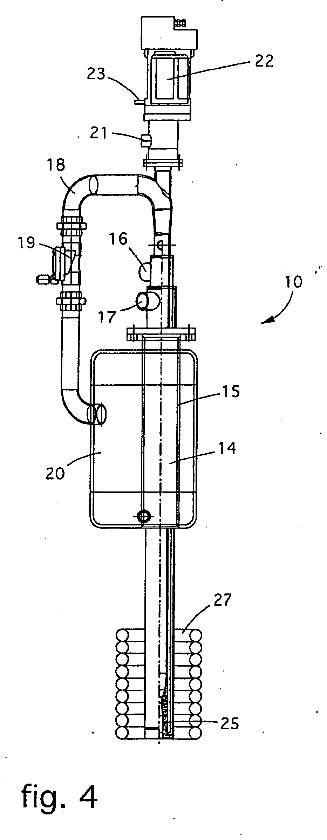

The device 10 (fig. 4) consists of a tubular delivery pipe 14, cooled by the circulation of water in a first external jacket 15. The inlet and outlet of the cooling water to/from said first external jacket 15 is achieved by means of suitable tubes comprising an inlet pipe 16 and an outlet pipe 17.

The lower part of the device 10 is equipped with a delivery nozzle 25, and is inserted inside the furnace 30 through a second cooling jacket 27, fixed to the lower part of the plane 35, inside the volume of the furnace 30. The second cooling jacket 27 also has the purpose of protecting the device 10 from impacts during the loading of the scrap, and from splashes of slag or liquid metal.

The second cooling jacket 27 remains fixed in position also when the device 10 is removed, thus facilitating the operations of re-installation and re-starting of the measuring cycle.

The delivery pipe 14 is connected, by means of a connection tube 18 along which a two-way electro valve 19 is present, of the on-off type, to a pressurized tank or accumulator 20 for a gassy fluid, for example inert gas, such a nitrogen or argon, or air.

The connection tube 18 connects to the delivery pipe 14 at a point upstream of the position of inlet 16 and outlet 17 of the cooling water. Moreover, in the example given in fig. 4, there is also a pipe 21 to introduce pressurized air, the position of which is provided upstream of the position where the gassy fluid is introduced inside the delivery pipe 14, in order to effect a continuous "washing" of the pipe so as to prevent blockages thereof for example in the loading, slagging and tapping steps.

On the axial extension, substantially at the top, of the delivery pipe 14 an optical detection instrument is disposed, for example an optical pyrometer 22, able to measure without contact the temperature of the liquid steel 40.

The optical pyrometer 22 is located upstream of the position, in the delivery pipe 14, where both the washing air and the gassy fluid are introduced, and outside said delivery pipe 14. Thanks to this configuration, when the emission is activated of a jet of inert gas or air at supersonic speed, through the pipe 14, in order to open a passageway in the layer of slag 42 and allow to perform the reading of the temperature without contact by the optical pyrometer 22, the jet is not disturbed by any disturbing element.

Consequently, there are no losses of load and therefore reductions in the force of impact of the jet, which can be directed against the slag 42 with the maximum possible force.

Moreover, thanks to the convergent/divergent configuration, of the "De Laval" type, of the emission nozzle 25 disposed in correspondence with the terminal end of the delivery pipe 14, a jet of the coherent type is obtained, which keeps also at outlet from the delivery pipe 14 a substantially constant section as far as the point of impact with the slag 42, and a coherent length proportional to the values of flow and pressure of feed, which gives the advantage of a greater efficiency of the opening of the passageway in the slag by the jet.

The optical pyrometer 22 is advantageously cooled by means of circulating cooling water introduced and expelled through suitable pipes 23.

According to a variant not shown in the figures, around the delivery pipe 14, at least for a part of its length, one or more conduits or pipes are provided, through which a mixture of a gaseous fuel, for example methane, and oxygen is delivered in order to obtain at the exit of the pipe 14 an annular flame. The annular flame is provided in order both to protect the coherent jet of gas during the delivery towards the slag 42, and to avoid crusting and plugging of the optical pyrometer 22 due to the particles of slag hitten by the jet of gas. Moreover, the annular flame allows to maintain clean and free from obstructions the space through which the optical pyrometer 22 performs its detection, avoiding that formations of slag and other products may obstruct both the delivery of the gaseous jet and the optical measurement.

In another embodiment, one or more burners are provided near and/or around the delivery pipe 14. The function of these burners is mainly that to maintain clean and free from obstructions the space of the furnace through which the pyrometer 22 performs its detection.

Advantageously, according to this embodiment, at least two burners are arranged in a substantial parallel orientation with respect to the delivery pipe 14 and deliver oriented flames around the jet of gas so as to form together a protecting annular flame around said jet at the exit of the delivery pipe 14.

The device 10 as described heretofore, in order to measure the temperature of the liquid metal 40, functions substantially as follows.

When the temperature is to be measured, for example a discreet type sampling, a jet of inert gas or air is emitted, by means of the rapid opening of the on-off valve 19, for a time comprised between about 1 and 5 seconds.

The jet of inert gas and/or air is emitted at high speed, for example at supersonic speed, from the delivery pipe 14 through the De Laval nozzle 25 and, hitting the layer of slag 42 above the liquid metal 40, opens a passageway through it, rendering an expanse of liquid metal 40 optically accessible to the optical pyrometer 22.

Advantageously, as can be seen in fig. 3, the device has an assembly position with an axis slightly inclined with respect to the vertical, so that the gassy jet emitted at supersonic speed does not cause wear on the refractory on the bottom 32 of the hearth 31.

At the same time, or immediately before or immediately after the emission of the jet of gas and/or air, the hearth 31 is made to rotate, in the direction of an inclination towards the tapping hole 34 (as can be seen in the position of fig. 2), with the hydraulic jacks normally present in this type of furnace 30, in order to lower the device 10 towards the liquid metal 40. By doing this, the distance between the optical pyrometer 22 and the meniscus 41 of the liquid metal is reduced, taking it for example to 700 mm or less, in conditions of safety, which makes the measurement extremely precise and reliable.

The tiltability of the furnace 30 can also be advantageously exploited, for example as the melting cycles proceed, to compensate the progressive erosion of the bottom 32 of the hearth 31, which leads to a reduction in thickness of the layer of refractory.

In this way, it is guaranteed that the measurement of the temperature is made always in conditions of safety and extreme accuracy and sensitivity.

Moreover, through a suitable pipe 21 to introduce pressurized air, it is possible to effect a continuous washing of the delivery pipe 14, in order to prevent blockages thereof, for example in the loading, slagging or tapping steps, or in any case when the jet is not present.

According to a first variant, the electro valve is opened and then closed rapidly (after about 1 second), to emit a delivery pulse.

In an advantageous variant, the on-off valve 19 is kept open for a longer time (from 2 to 5 seconds) after the emission of a flow pulse, in order to gradually extinguish the flow of gas and hence to slowly close the passageway in the slag 42 previously created, thus contrasting the phenomenon of splashing of the slag 42, which occurs when the pulsed jet is suddenly interrupted. In this way the risk of occlusion of the emission hole of the delivery pipe 14 is avoided more effectively.

The gradual reduction in flow after the pulsing step evolves according to the free emptying of the tank 20, which occurs in about 5 seconds; subsequently the valve 19 is closed and the tank 20 is refilled for a new delivery step.

In the event that, instead of using the tank 20, feed is made through a distribution line, the descent ramp of the flow is advantageously managed using a valve of the proportional type to regulate the flow, instead of the on-off valve 19.

In fig. 5 the assembly wedge 36 is visible on the external wall of the furnace 30, and the protective container 12, in the lower part of which all the pipes are disposed, indicated in their entirety by the reference number 28: the inlet/outlet pipes for the cooling water, the gas, the air, the electric current, and also the relative rapid attachments for the external feed lines.

The protective container 12 can be removed rapidly from its position for the easy and rapid maintenance of the device 10.

## Claims

1. Device for measuring the temperature of the liquid metal (40) in an electric arc furnace (30), or other container similar to a furnace, comprising a delivery pipe (14) having a lower end with a convergent/divergent nozzle (25) to deliver a jet of inert gas or air against the layer of slag above the meniscus (41) of liquid metal (40), and optical detection means (22) to detect said temperature, **characterized in that** the optical detection means (22) is associated to an upper part of the delivery pipe (14) and **in that** the device further comprises a tube (18) for introducing in the delivery pipe (14) the inert gas, wherein the connection between the tube (18) and the delivery pipe (14) is located downstream said optical detection means (22), and wherein the tube (18) is associated with a valve (19) configured to deliver a flow pulse at supersonic speed of inert gas or air.

2. Device as in claim 1, **characterized in that** the opening time of the valve (19) is about 1 second.

3. Device as in claim 1, installed in an electric arc furnace (30) having the tapping hole (34) of the liquid metal (40) on the bottom (32) of the hearth (31) located in an eccentric position, **characterized in that** it is assembled on the external edge of the furnace (30) on the side of said tapping hole (34).

4. Device as in claim 3, **characterized in that** in the non-tilted position of the furnace (30), it has a high assembly position with respect to the meniscus (41) of the liquid metal (40), at least equal to 1 meter.

5. Device as in claim 1, **characterized in that** at least the nozzle (25), inserted inside the furnace (30), of said delivery pipe (14) of the jet of inert gas or air, is associated with an external jacket (27) for cooling and mechanical protection.

6. Device as in claim 5, **characterized in that** said external jacket (27) is assembled inside the furnace (30) and remains in position also in the event that the device (10) is removed.

7. Device as in claim 1, **characterized in that** the device has an operating assembly position with an axis inclined with respect to the vertical to the bottom (32) of said furnace (30).

8. Device as in claim 1, **characterized in that** the device comprises a container (12) for housing and protecting the delivery pipe of the inert gas or air (14) and the optical detection means (22).

9. Device as in claim 1, **characterized in that** said valve is a two-way electro valve (19) of the on-off type.

10. Device as in claim 1, **characterized in that** said valve is a proportional valve (19) connected to the tube (18) by means of a distribution line of high pressure inert gas or air.

11. Device as in claim 1, **characterized in that** said delivery pipe of the inert gas or air (14) has, at least in correspondence with its outlet section, an internal shaping as a convergent/divergent nozzle (25).

12. Device as in claim 1, **characterized in that** said optical detection means (22) is of the bi-chromatic type, that is, able to read two frequency bands.

13. Device as in claim 1, **characterized in that** the device comprises one or more conduits located around said delivery pipe (14), through which a mixture of a gaseous fuel and oxygen is delivered in order to obtain at the exit of said pipe (14) a protecting annular flame around said jet of gas during the delivery of the gas towards the slag (42).

14. Device as in claim 1, **characterized in that** the device comprises one or more burners located near and/or around said delivery pipe (14) for delivering a mixture of a gaseous fuel and oxygen in order to maintain clean and free from obstructions the space of the furnace through which the pyrometer (22) performs its detection.

15. Method for measuring the temperature of the liquid metal (40) in an electric arc furnace (30), or other similar melting container analogous or comparable to a furnace, in which a measuring device (10) as in any claim from 1 to 14 is used, comprising at least a step of delivering a jet of inert gas or air against the layer of slag above the meniscus (41) of liquid metal (40) with a flow pulse at supersonic speed, and a step of detecting the temperature without contact by optical detection means (22), and wherein simultaneously with said step of delivering the jet of air/gas, or immediately before, said furnace (30) or container is tilted in order to take said measuring device (10) in a closer position with respect to said meniscus (41) of liquid metal (40), wherein the inlet position of the flow pulse of inert gas or air is located downstream the location of the optical detection means (22).

16. Method as in claim 15, **characterized in that** the entity of tilting of the furnace (30) is such as to take the distance of the device (10) from the meniscus (41) to a pre-defined value.

17. Method as in claim 15 or 16, **characterized in that** the jet of inert gas or air occurs through an on-off valve (19) which is kept open for a time about 1 second.

18. Method as in claim 17, **characterized in that** it provides a flow of pressurized air even when the on-off valve (19) is closed, so as to effect a continuous washing of the delivery pipe (14), in order to avoid blockages thereof, for example in the steps of loading the scrap.

## Patentansprüche

1. Einrichtung zur Messung der Temperatur des flüssigen Metalls (40) in einem Elektrolichtbogenofen (30) oder einem anderen einem Ofen entsprechenden Behälter, umfassend ein Abgaberohr (14) mit einem unteren Ende mit einer konvergenten/divergenten Düse (25), um einen Strahl von Inertgas oder Luft auf die Schlackeschicht oberhalb des Meniskus (41) von flüssigem Metall (40) abzugeben, und optische Nachweismittel (22) zum Nachweis der Temperatur, **dadurch gekennzeichnet, dass** das optische Nachweismittel (22) einem oberen Teil des Abgaberohrs (14) zugeordnet ist und dass die Einrichtung weiterhin eine Röhre (18) zum Einleiten des Inertgases in das Abgaberohr (14) umfasst, wobei die Verbindung zwischen der Röhre (18) und dem Abgaberohr (14) stromabwärts von dem optischen Nachweismittel (22) angeordnet ist und wobei die Röhre (18) einem Ventil (19) zugeordnet ist, das eingerichtet ist, um einen Strömungspuls mit Inertgas oder Luft bei Überschallgeschwindigkeit abzugeben.

2. Einrichtung nach Anspruch 1, **dadurch gekennzeichnet, dass** die Öffnungsdauer des Ventils (19) etwa 1 Sekunde beträgt.

3. Einrichtung nach Anspruch 1, die in einem Elektrolichtbogenofen (30), bei dem die Zapflöcher (34) des flüssigen Metalls (40) am Boden (32) der Feuerstelle (31) in einer exzentrischen Position angeordnet sind, angebracht ist, **dadurch gekennzeichnet, dass** sie am äußeren Rand des Ofens (30) auf der Seite des Zapfloches (34) angeordnet ist.

4. Einrichtung nach Anspruch 3, **dadurch gekennzeichnet, dass** sie in der nicht geneigten Position des Ofens (30) eine hohe Montageposition bezüglich des Meniskus (41) des flüssigen Metalls (40), die mindestens 1 Meter entspricht, aufweist.

5. Einrichtung nach Anspruch 1, **dadurch gekennzeichnet, dass** mindestens der in das Innere des Ofens (30) eingeführten Düse (25) des Abgaberohrs (14) des Strahls von Inertgas oder Luft eine äußere Ummantelung (27) zum Abkühlen und zum mechanischen Schutz zugeordnet ist.

6. Einrichtung nach Anspruch 5, **dadurch gekennzeichnet, dass** die äußere Ummantelung (27) im Inneren des Ofens (30) zusammengefügt ist und auch in dem Fall, dass die Einrichtung entfernt wird, in Position verbleibt

7. Einrichtung nach Anspruch 1, **dadurch gekennzeichnet, dass** die Einrichtung eine Bertriebsmontageposition mit einer bezüglichen der Vertikalen zu dem Boden (32) des Ofens (30) geneigten Achse aufweist.

8. Einrichtung nach Anspruch 1, **dadurch gekennzeichnet, dass** die Einrichtung einen Behälter (12) zum Aufnehmen und zum Schutz des Abgaberohrs des Inertgases oder von Luft (14) und des optischen Nachweismittels (22) umfasst.

9. Einrichtung nach Anspruch 1, **dadurch gekennzeichnet, dass** das Ventil ein elektrisches Ein-Aus-Zweiwegeventil (19) ist.

10. Einrichtung nach Anspruch 1, **dadurch gekennzeichnet, dass** das Ventil ein Proportionalventil (19) ist, das mit der Röhre (18) mittels einer Verteilungsleitung für Hockdruck-Inertgas oder -Luft verbunden ist.

11. Einrichtung nach Anspruch 1, **dadurch gekennzeichnet, dass** das Abgaberohr für das Inertgas oder für Luft (14), zumindest korrespondierend mit seinem Auslassabschnitt, eine innere Ausformung als eine konvergente/divergente Düse (25) aufweist.

12. Einrichtung nach Anspruch 1, **dadurch gekennzeichnet, dass** das optischen Nachweismittel (22) vom bichromatischen Typ ist, das heißt, in der Lage ist, zwei Frequenzbänder zu lesen.

13. Einrichtung nach Anspruch 1, **dadurch gekennzeichnet, dass** die Einrichtung eine oder mehrere Leitungen umfasst, die um das Abgaberohr (14) angeordnet sind, durch die ein Gemisch von einem gasförmigen Kraftstoff und Sauerstoff abgegeben wird, um am Ausgang des Rohres (14) eine ringförmige Schutzflamme um den Strahl von Gas während der Abgabe des Gases auf die Schlacke (42) zu erhalten.

14. Einrichtung nach Anspruch 1, **dadurch gekennzeichnet, dass** die Einrichtung einen oder mehrere Brenner umfasst, die in der Nähe und/oder um das Abgaberohr (14) herum angeordnet sind, zur Abgabe eines Gemisches von einem gasförmigen Kraftstoff und Sauerstoff, um den Raum des Ofens, durch den das Pyrometer (22) seinen Nachweis vornimmt, sauber und frei von Hindernissen zu halten.

15. Verfahren zum Messen der Temperatur des flüssigen Metalls (40) in einem Elektrolichtbogenofen (30) oder in einem anderen ähnlichen zu einem Ofen gleichwertigen oder vergleichbaren Schmelzbehälter, in dem eine Messeinrichtung (10) nach einem der Ansprüche 1 bis 14 verwendet wird, umfassend mindestens einen Schritt der Abgabe eines Strahls von Inertgas oder Luft auf die Schlackeschicht oberhalb des Meniskus (41) von flüssigem Metall (40) mit einem Strömungspuls bei Überschallgeschwindigkeit, und einen Schritt des Nachweises der Temperatur ohne Kontakt durch das optische Nachweismittel (22) und wobei gleichzeitig mit dem Schritt der Abgabe des Strahls von Gas/Luft oder unmittelbar zuvor der Ofen (30) oder der Behälter geneigt wird, um die Messeinrichtung (10) in eine nähere Position bezüglich des Meniskus (41) von flüssigem Metall zu bringen, wobei die Einlassposition des Strömungspulses von Inertgas oder Luft stromabwärts von der Stelle des optischen Nachweismittels (22) angeordnet ist.

16. Verfahren nach Anspruch 15, **dadurch gekennzeichnet, dass** der Schritt des Kippens des Ofens (30) so ist, dass der Abstand der Einrichtung (10) von dem Meniskus (41) auf einen vordefinierten Wert gebracht wird.

17. Verfahren nach Anspruch 15 oder 16, **dadurch gekennzeichnet, dass** der Strahl von Inertgas oder Luft durch ein Ein-Aus-Ventil (19) auftritt, welches für eine Zeit von etwa 1 Sekunde offen gehalten wird.

18. Verfahren nach Anspruch 17, **dadurch gekennzeichnet, dass** es einen Strom von Druckluft bereitstellt, auch wenn das Ein-Aus-Ventil (19) geschlossen ist, so dass ein kontinuierliches Waschen des Abgaberohrs (14) bewirkt wird, um Blockaden davon zu vermeiden, beispielsweise in den Schritten des Beladens mit Schrott.

## Revendications

1. Dispositif pour mesurer la température d'un métal liquide (40) dans un four à arc électrique (30), ou autre conteneur similaire à un four, comprenant un tube de délivrance (14) ayant une extrémité inférieure avec une buse convergente/divergente (25) pour délivrer un jet de gaz inerte ou d'air contre la couche de scories au-dessus du ménisque (41) de métal liquide (40), et des moyens de mesure optique (22) pour mesurer ladite température, **caractérisé en ce que** les moyens de mesure optique (22) sont associés à une partie supérieure du tube de délivrance (14) et **en ce que** le dispositif comprend en outre un tube (18) pour introduire le gaz inerte dans le tube de délivrance (14), la connexion entre le tube (18) et le tube de délivrance (14) étant située en aval desdits moyens de mesure optique (22) et le tube (18) étant associé à une vanne (19) configurée pour délivrer une pulsation de flux de gaz inerte ou d'air à vitesse supersonique.

2. Dispositif selon la revendication 1, **caractérisé en ce que** la durée d'ouverture de la vanne (19) est d'environ 1 seconde.

3. Dispositif selon la revendication 1, installé dans un four à arc électrique (30) ayant le trou de coulée (34) de métal liquide (40) au fond (32) de la sole (31) situé dans une position excentrée, **caractérisé en ce qu'**il est assemblé sur le bord extérieur du four (30) du côté dudit trou de coulée (34).

4. Dispositif selon la revendication 3, **caractérisé en ce que** dans la position non inclinée du four (30), il est situé à un emplacement d'assemblage haut par rapport au ménisque (41) du métal liquide (40), au moins égal à 1 mètre.

5. Dispositif selon la revendication 1, **caractérisé en ce qu'**au moins la buse (25), insérée dans le four (30), dudit tube de délivrance (14) du jet de gaz inerte ou d'air, est associée à une jaquette externe (27) pour le refroidissement et la protection mélanique.

6. Dispositif selon la revendication 5, **caractérisé en ce que** ladite jaquette externe (27) est assemblée à l'intérieur du four (30) et reste en place également lorsque le dispositif (10) est enlevé.

7. Dispositif selon la revendication 1, **caractérisé en ce que** le dispositif a un emplacement d'assemblage opérationnel avec un axe incliné par rapport à la verticale du fond (32) dudit four (30).

8. Dispositif selon la revendication 1, **caractérisé en ce que** le dispositif comprend un conteneur (12) pour loger et protéger le tube de délivrance du gaz inerte ou d'air (14) et les moyens de mesure optique (22).

9. Dispositif selon la revendication 1, **caractérisé en ce que** ladite vanne est une électrovanne à deux voies (19) du type ouverte-fermée.

10. Dispositif selon la revendication 1, **caractérisé en ce que** ladite vanne est une vanne proportionnelle (19) reliée au tube (18) au moyen d'une ligne de distribution de gaz inerte ou d'air sous haute pression.

11. Dispositif selon la revendication 1, **caractérisé en ce que** ledit tube de délivrance de gaz inerte ou d'air (14) a, au moins en correspondance avec sa section de sortie, une forme interne de buse convergente/divergente (25).

12. Dispositif selon la revendication 1, **caractérisé en ce que** lesdits moyens de mesure optique (22) sont du type dichromatique, c'est-à-dire capables de lire deux bandes de fréquence.

13. Dispositif selon la revendication 1, **caractérisé en ce que** le dispositif comprend un ou plusieurs conduits situés autour dudit tube de délivrance (14), à travers lesquels un mélange d'un carburant gazeux et d'oxygène est délivré afin d'obtenir à la sortie dudit tube (14) une flamme annulaire protectrice autour dudit jet de gaz durant la délivrance du gaz vers la scorie (42).

14. Dispositif selon la revendication 1, **caractérisé en ce que** le dispositif comprend un ou plusieurs brûleurs situés près de et/ou autour dudit tube de délivrance (14) pour délivrer un mélange de carburant gazeux et d'oxygène afin de maintenir propre et exempt d'obstructions l'espace du four à travers lequel le pyromètre (22) effectue sa mesure.

15. Procédé de mesure de la température du métal liquide (40) dans un four à arc électrique (30) ou un conteneur de fusion similaire analogie ou comparable à un four, dans lequel un dispositif de mesure (10) selon l'une quelconque des revendications 1 à 14 est utilisé, comprenant au moins une étape de délivrance d'un jet de gaz inerte ou d'air contre la couche de scories au-dessus du ménisque (41) de métal liquide (40) avec une pulsation de flux à vitesse supersonique, et une étape de mesure de la température sans contact par des moyens de détection optique (22) et dans lequel concomitamment avec ladite étape de délivrance du jet d'air/gaz, ou juste avant, ledit four (30) ou conteneur est incliné afin d'amener ledit dispositif de mesure (10) à en endroit plus proche dudit ménisque (41) de métal liquide (40), le point d'introduction de ladite pulsation de gaz inerte ou d'air étant situé en aval de l'endroit où se trouvent les moyens de mesure (22).

16. Procédé selon la revendication 15, **caractérisé en ce que** le degré d'inclinaison du four (30) est tel qu'il amène la distance du dispositif (10) au ménisque (41) à une valeur prédéfinie.

17. Procédé selon la revendication 15 ou 16, **caractérisé en ce que** le jet de gaz inerte ou d'air se produit à travers une vanne marche-arrêt (19) qui est maintenue ouverte pendant une durée d'environ 1 seconde.

18. Procédé selon la revendication 17, caractérisé en qu'il fournit un flux d'air sous pression même lorsque la vanne marche-arrêt (19) est fermée, de manière à effectuer un lavage continu du tube de délivrance (14), afin d'éviter tout bouchage de celui-ci, par exemple lors des étapes de chargement des rebuts.
